# EUROPEAN PATENT SPECIFICATION

(11) **EP 2 820 101 B1**
(45) Date of publication and mention of the grant of the patent: **24.07.2019**
(21) Application number: 12709138.7
(22) Date of filing: 01.03.2012
(51) Int. Cl.: C09K 3/10, B65D 81/26

(54) **CLOSURE LINER COMPOSITION WITH IMPROVED OXYGEN REDUCTION**
VERSCHLUSSDICHTUNGSZUSAMMENSETZUNG MIT VERBESSERTER SAUERSTOFFREDUKTION
COMPOSITION DE REVÊTEMENT DE FERMETURE AVEC RÉDUCTION D'OXYGÈNE AMÉLIORÉE

(43) Date of publication of application: 07.01.2015
(73) Proprietor: Henkel IP & Holding GmbH, 40589 Düsseldorf (DE)
(72) Inventor: BRICOUT, Estelle, 28130 Hanches (FR); BONNEL, Carole-Beryl, 78000 Versailles (FR)
(74) Representative: Tomkins & Co
(86) International application number: PCT/GB2012/000208
(87) International publication number: WO 2013/128145

(56) References cited:
- EP-A1- 0 328 336
- US-A- 5 075 362
- US-A- 5 731 053
- US-A- 5 798 055
- US-A1- 2003 207 056
- US-B1- 6 677 397

## Description

### Background of the Invention

The present invention relates to a closure liner composition with improved oxygen reduction.

Closures (or caps) for use in food, beverage and pharmaceutical containers are typically made of plastic or metal or both metal and plastic. Such closures generally include a liner (or gasket) on the inner surface to provide a hermetic seal at the container opening. Since many products that are packaged in a container can be adversely affected by the presence of oxygen, it is particularly desirable if the closure liner is formulated to prevent oxygen ingress. Various products are oxygen sensitive and must be protected from oxygen ingress, the most typical one being beer. Such oxygen sensitive products, particularly beer, are typically packaged in a bottle capped with a metal closure (or crown).

Various techniques have been employed to formulate liner compositions to prevent oxygen ingress. In one technique, as described, for example, in US 5, 075,362 and EP 0 328 336, the liner composition includes an oxygen scavenger, such as an ascorbate or sulfite salt, blended into the base polymer composition that can be molded into the form of a closure liner. With this type of closure liner, the oxygen scavenger will reduce the amount of residual oxygen in the headspace of the container upon filling, as well as consume any external oxygen that permeates through the closure. Since the oxygen scavenger is a reducing agent that reacts with oxygen in the presence of water vapor (but is substantially inert in the absence of moisture), one reasonably might conclude that the base polymer composition should have some permeability to both oxygen and water vapor in order to permit these materials to reach the oxygen scavenger incorporated into the polymer.

Another approach to prevent oxygen ingress is to utilize a liner composition that is an oxygen barrier - i.e., the liner is a physical barrier that prevents ingress of oxygen. Such a liner composition is described, for example, in US 6,677,397 and includes polyisobutylene as an oxygen barrier material in the base polymer composition that can be molded into the form of a closure liner. While this type of liner may reduce ingress of external oxygen into the container, it will not reduce the amount of oxygen in the headspace of the container.

A further approach to prevent oxygen ingress is to utilize a closure liner that has both an oxygen scavenger and an oxygen barrier. Such an approach is described, for example, in US 6,194,042. However, the liner described in this patent consists of multiple layers, where one layer is a foamed layer that includes an oxygen scavenging material and another, separate layer serves as a gas barrier layer. The foamed layer permits the free flow of oxygen (and moisture) to come in contact with the oxygen scavenger. A multilayer device such as this is expensive and complicated to manufacture because it requires multiple different manufacturing process steps: e.g., a multilayer liner sheet is coextruded, then formed into individual liners and then placed into the cap.

U.S. patent application US 2003/207056 (A1) describes a closure element including a sealing element or polymer liner compound having improved barrier properties. The sealing element or compound includes (a) a thermoplastic polymer; and (b) an effective absorbing amount of a cyclodextrin material. The cyclodextrin material is selected from the group comprising alpha-cyclodextrin, beta-cyclodextrin, gamma-cyclodextrin, derivatives of alpha-cyclodextrin, beta-cyclodextrin and gamma-cyclodextrin and mixtures thereof.

U.S. patent application US 5,798,055 describes an oxygen scavenging composition composed of a carrier material and a metal-loaded cationic exchange material having the metal in a zero valence state. The composition is contained within the interior cavity of a container to scavenge oxygen therein. The composition may form at least a part of the interior surface of the container or be present therein in the form of a film, mat, sachet or ceramic.

U.S. patent application US 5,731,053 describes potable liquid containers including a container, container closure and a closure liner, where the closure liner is formed from a polymeric heterogeneous blend of unvulcanized and uncrosslinked butyl rubber and a thermoplastic polymer. The closure liners are used for containers with closures such as a twist crown, a crown cork or a screw cap, for bottles, jars and the like, and more specifically for beer, juice and soft-drink bottles with closures made of metal or plastics.

It would be highly desirable to provide a closure liner composition with improved oxygen reduction properties and, thereby, improved shelf life. In addition, it would be highly desirable to provide a closure liner composition that is both cost effective and capable of being processed (e.g., molded into closures such as bottle crowns) in a single manufacturing step. It would be further desirable to provide a closure liner composition that prevents contamination from other undesirable gases or solvents, such as trichloroanisole (TCA).

### Summary of the Invention

The present invention embraces a closure liner composition comprising a mixture (or blend) of a thermoplastic polymer, an oxygen barrier polymer, and a particulate oxygen scavenging material. The oxygen barrier polymer comprises polyisobutylene. The particulate oxygen scavenging material is selected from the group consisting of the alkali metal salts of sulfite, ascorbate, isoascorbate, and a mixture of two or more of these materials. In other words, the oxygen scavenging material is one or more of an alkali metal sulfite, an alkali metal ascorbate or an alkali metal isoascorbate. The closure liner composition of the present invention provides superior oxygen reduction properties and improved shelf life.

The above-described closure liner composition may be used to fabricate a liner for a closure. The liner is fabricated as a single layer.

The present invention also includes a closure for a container, wherein the closure includes a closure liner fabricated from the afore- described closure liner composition. In particular, the present invention is directed to a metal crown for a beverage container, wherein the metal crown includes a closure liner fabricated from the afore-described closure liner composition. In addition, the present invention embraces a container filled with a product, wherein the container is capped by a closure that includes a liner fabricated from the afore-described closure liner composition. In particular, the present invention embraces a bottle filled with a beverage, wherein the bottle is capped by a metal crown that includes a liner fabricated from the afore-described closure liner composition.

### Brief Description of the Drawings

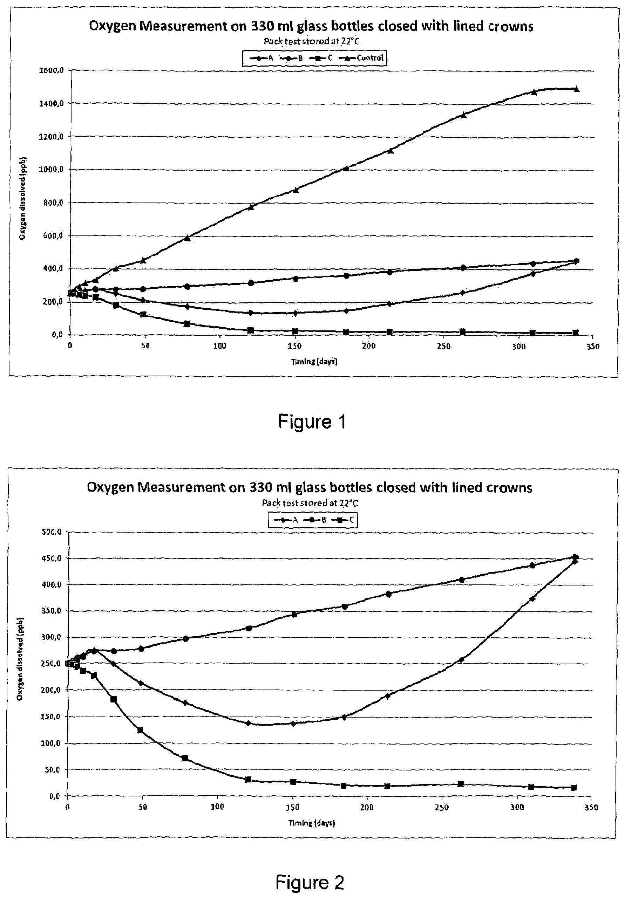

Fig. 1 is a graph that depicts the oxygen reducing (i.e., absorbing/blocking) properties over time of a closure liner of the present invention (C) that includes both an oxygen scavenger material and an oxygen barrier polymer compared to closure liners that include either an oxygen scavenger material (A) or an oxygen barrier polymer (B).
Fig. 2 is a graph of the data contained in Fig. 1, but without the control in order to permit expansion of the graph and more clearly depict the oxygen reducing properties of a closure liner of the present invention (C) over time compared to closure liners A and B.

### Detailed Description of the Invention

In particular, the closure liner composition of the present invention advantageously comprises, by weight of the composition, 40% to 80%, preferably 50% to 70%, of a thermoplastic polymer, 5% to 50%, preferably 10% to 30%, of an oxygen barrier polymer, and 1% to 30%, preferably 3% to 20%, more preferably 5% to 15%, of a particulate oxygen scavenging material.

The oxygen barrier polymer comprises polyisobutylene, and more preferably consists essentially of polyisobutylene. Typically, polyisobutylene is a copolymer of isobutylene with a small amount (e.g., about 2% by wt.) of isoprene. The particulate oxygen scavenging material is selected from the group consisting of an alkali metal sulfite, an alkali metal ascorbate, an alkali metal isoascorbate, and a mixture of two or more of these materials. The preferred alkali metal is sodium or potassium. Sodium sulfite is especially preferred as the oxygen scavenging material. It is preferred that the particulate oxygen scavenging material have an average particle size in the range of about 0.1 µm to about 50 µm.

The thermoplastic polymer generally should be permeable, or at least partially permeable, to oxygen and water vapor. The thermoplastic polymer comprises high density polyethylene or a blend of high density polyethylene and vinyl acetate.

The closure liner composition may contain other optional components such as filler, slip aids, process aids, pigments, lubricants, stabilizers, antioxidants, UV stabilizers, plasticizers, mineral oil, tackifying resins and other conventional additives in conventional amounts, depending upon the nature of the composition and the properties desired. Typically, the total amount of such additives is generally below 20%, preferably below 10%, by weight of the composition.

The above-described components for the closure liner composition typically are subjected to a twin screw compounding process (e.g., using step melt temperatures of about 150°C to 220°C) to form pellets, which pellets may then be molded into a closure liner, typically via a high speed cold molding process. A closure liner fabricated of the above-described closure liner composition preferably will have a Shore hardness between 70 Shore A and 100 Shore A, and a melt flow index (MFI) between 0 and 20 g/min (2.16kg, 190°C).

The closure liner may be pre-molded, then inserted into a closure, or preferably it will be molded directly (i.e., in situ) into the inner portion of the closure, particularly where the closure is a metal crown for use in capping a bottle. The closure with liner may then be fitted onto a container that has been filled with a product, e.g., a bottle filled with beer.

### Example

Closure liners are prepared from the closure liner compositions shown in Table 1 below. Compositions A and B are prior art compositions for comparison, while composition C is a composition of the present invention. Composition A includes an oxygen scavenging material (sodium sulfite), but does not include an oxygen barrier polymer. Composition B includes an oxygen barrier polymer (polyisobutylene), but does not include an oxygen scavenging material. Composition C includes both an oxygen scavenging material (sodium sulfite) and an oxygen barrier polymer (polyisobutylene).

**Table 1**

| Ingredient | Amount (parts by weight) | | | |
|---|---|---|---|---|
| | A | B | C | Control |
| LDPE¹ | 30 | | | 37 |
| HDPE² | | 60 | 58 | |
| Ethylene Butylene Copolymer³ | 18 | 10 | 10 | 18 |
| Polyisobutylene⁴ | | 30 | 25 | |
| Styrene-Butadiene-Styrene Copolymer⁵ | 30 | | | 30 |
| White Mineral Oil⁶ | 15 | | | 15 |
| Polydimethyl Siloxane⁷ | | 0.5 | 0.5 | |
| Sodium Sulfite (anhydrous; <50 µm) | 7 | | 7 | |

| | | | | |
|---|---|---|---|---|
| ¹ LDPE 1070 MN 18C (Total Petrochemicals) ² Stamylan HD7108 (Sabic) ³ Flexirene CL10 (Polimeri) for A; Clearflex MQB0 (Polymeri) for B&C ⁴ Butyl 101-3 (Lanxess) ⁵ Kraton D1153 ES (30% styrene; Kraton Polymers) ⁶ Finavestan A360B (Total Lubricants) ⁷ Siliconol AK1000 (Wacker Chimie) | | | | |

Preparation of the closure liner pellets. All the ingredients of the composition are blended in a twin screw extruder at melt temperatures between 150°C and 220°C to provide pellets for each of the compositions A, B and C, as well as the Control, which includes no oxygen barrier or scavenger material.

Preparation of lined crown closures. The above-described extruded pellets are melted, deposited in crown closures and cold molded using conventional crown lining equipment. The closure liner adheres well to the inner surface of the crown (closure) shell.

Physical barrier test. The lined crown closures are tested for physical barrier performance, namely their ability to block permeation of the contaminant 2,4,6-tricholoranisole (TCA). The test crowns (containing liners A, B and C as described above) are sealed onto bottles containing 5 % ethanol solution. The bottles are then placed in a controlled environment containing TCA and stored for 30 days until a detectable level of TCA has permeated the samples and controls. The samples are subjected to liquid/liquid extraction and GC/MS analysis to measure the TCA contaminant permeated into the bottle. The results are shown in Table 2.

**Table 2**

| Composition | TCA (µg/L) |
|---|---|
| A | 3760 |
| B | 40 |
| C | 30 |

As can be seen from the above data, composition C has excellent physical barrier properties to TCA, which means that it also would perform as a physical barrier to oxygen. When compared to the barrier performance of composition B, it can be seen that the presence of oxygen scavenger in composition C does not adversely affect the physical barrier performance.

Oxygen reduction test. Lined crowns are closed onto 330 ml glass bottles filled with acidified and carbonated water. An oxygen sensor is glued inside the bottles before the filling step. After pasteurization at 62°C for 20 minutes, the bottles are stored at around 22°C for oxygen content measurement. Oxygen measurements are performed on shaken bottles using the non-invasive method, Oxysense™ 101. This technique measures the amount of oxygen in the package over time and, thus, evaluates the performance of crown liners to scavenge oxygen within the package and/or block oxygen from permeating into the package.

The ability of crowns containing closure liners fabricated from compositions A, B and C to reduce oxygen levels in filled bottles versus a Control is depicted in Fig. 1. As can be seen, closure liners fabricated of composition C of the present invention show the greatest reduction in oxygen, and the low level of oxygen is maintained for more than 300 days. In contrast, closure liners fabricated of compositions A and B reduce oxygen levels to a much lesser extent, and that level increases over the extended time period. The difference in performance of composition A versus compositions B and C is more clearly depicted in Fig. 2, which is a graph based on the same data shown in Fig. 1, but without the control, in order to expand the graph.

The superior performance of closure liners made with composition C is surprising in two respects. First, the oxygen scavenger material requires the presence of moisture to be activated. Since a liner containing the barrier polymer should have a lower permeation to water compared to a liner without the barrier polymer, it would be expected to have a lower oxygen scavenger efficiency by reducing the moisture permeation. Second, since a liner containing the barrier polymer has a reduced permeability to oxygen compared to a liner without the barrier polymer, it would be expected to have a lower oxygen scavenger efficiency by reducing the oxygen permeation. In other words, one would expect that the barrier polymer would inhibit both moisture and oxygen from contacting the oxygen scavenger material. This example indicates that it is not the case. The oxygen scavenger performance of the liner is not adversely impacted by the barrier polymer. In fact, as can be seen, the liner made of composition C reacts faster than the liner made of composition A.

## Claims

1. A closure liner composition comprising:
a thermoplastic polymer comprising high density polyethylene or a blend of high density polyethylene and vinyl acetate, the thermoplastic polymer being present in the amount of 40-80% by weight of the composition;
an oxygen barrier polymer comprising polyisobutylene, the oxygen barrier polymer being present in the amount of 5-50% by weight of the composition;
and a particulate oxygen scavenging material selected from the group consisting of an alkali metal sulfite, an alkali metal ascorbate, an alkali metal isoascorbate, and a mixture of two or more of these materials, the particulate oxygen scavenging material being present in the amount of 1-30% by weight of the composition;
the closure liner composition being formed into a single layer closure liner, the single layer closure liner having a Shore hardness between 70 Shore A and 100 Shore A, and a melt flow index between 0 and 20 g/min, 2.16 Kg., 190°C.

2. The closure liner composition according to claim 1 comprising, by weight of the composition, 50% to 70% of a thermoplastic polymer, 10% to 30% of an oxygen barrier polymer comprising polyisobutylene, and 3% to 20% of a particulate oxygen scavenging material selected from an alkali metal sulfite, an alkali metal ascorbate, an alkali metal isoascorbate, and a mixture of two or more of these materials.

3. The closure liner composition according to any preceding claim wherein the oxygen barrier polymer consists essentially of polyisobutylene.

4. The closure liner composition according to any preceding claim wherein the particulate oxygen scavenging material comprises sodium sulfite.

5. A closure for a container, wherein the closure includes a closure liner fabricated from the closure liner composition according to any of the preceding claims.

6. A metal crown for a beverage container, wherein the metal crown includes a closure liner fabricated from the closure liner composition according to any of claims 1 to 4.

7. A container filled with a product, wherein the container is capped by a closure, wherein the closure includes a closure liner fabricated from the closure liner composition according to any of claims 1 to 4.

8. A bottle filled with a beverage, wherein the bottle is capped by a metal crown that includes a liner fabricated from a closure liner composition according to any of claims 1 to 4.

## Patentansprüche

1. Verschlussdichtungszusammensetzung, die Folgendes aufweist:
ein thermoplastisches Polymer, welches ein hochdichtes Polyethylen oder eine Mischung aus hochdichtem Polyethylen oder Vinylacetat aufweist, wobei das thermoplastische Polymer in der Menge von 40-80 Gew.-% der Zusammensetzung vorhanden ist;
ein Sauerstoffbarrierenpolymer, welches Polyisobutylen aufweist, wobei das Sauerstoffbarrierenpolymer in der Menge von 5-50 Gew.-% der Zusammensetzung vorhanden ist;
und ein partikelförmiges Sauerstofffängermaterial, welches aus der Gruppe ausgewählt ist, die aus einem Alkalimetall-Sulfid, einem Alkalimetall-Ascorbat, einem Alkalimetall-Isoascorbat, und einer Mischung von zwei oder mehreren dieser Materialien besteht, wobei das partikelförmige Sauerstofffängermaterial in der Menge von 1-30 Gew.-% der Zusammensetzung vorhanden ist;
wobei die Verschlussdichtungszusammensetzung zu einer einschichtigen Verschlussdichtung geformt ist, wobei die einschichtige Verschlussdichtung eine Shore-Härte zwischen 70 Shore A und 100 Shore A und einen Schmelzflussindex zwischen 0 und 20g/min bei 2,16 kg, 190°C hat.

2. Verschlussdichtungszusammensetzung nach Anspruch 1, die in Gew.-% der Zusammensetzung Folgendes aufweist:
50% bis 70% eines thermoplastischen Polymers, 10% bis 30% eines Sauerstoffbarrierenpolymers, welches Polyisobutylen aufweist, und 3% bis 20% eines partikelförmigen Sauerstofffängermaterials, welches aus einem Alkalimetall-Sulfid, einem Alkalimetall-Ascorbat, einem Alkalimetall-Isoascorbat, und einer Mischung von zwei oder mehreren dieser Materialien ausgewählt ist.

3. Verschlussdichtungszusammensetzung nach irgendeinem vorhergehenden Anspruch, wobei das Sauerstoffbarrierenpolymer im Wesentlichen aus Polyisobutylen besteht.

4. Verschlussdichtungszusammensetzung nach irgendeinem vorhergehenden Anspruch, wobei das partikelförmige Sauerstofffängermaterial Natriumsulfid aufweist.

5. Verschluss für einen Behälter, wobei der Verschluss eine Verschlussdichtung aufweist, die aus der Verschlussdichtungszusammensetzung nach einem der vorhergehenden Ansprüche hergestellt ist.

6. Metallkronenkorken für einen Getränkebehälter, wobei der Metallkronenkorken eine Verschlussdichtung aufweist, die aus der Verschlussdichtungszusammensetzung nach einem der Ansprüche 1 bis 4 hergestellt ist.

7. Behälter, der mit einem Produkt gefüllt ist, wobei der Behälter durch einen Verschluss verschlossen ist, wobei der Verschluss eine Verschlussdichtung aufweist, die aus der Verschlussdichtungszusammensetzung nach einem der Ansprüche 1 bis 4 hergestellt ist.

8. Flasche, die mit einem Getränk gefüllt ist, wobei die Flasche durch einen Metallkronenkorken verschlossen ist, der eine Dichtung aufweist, die aus einer Verschlussdichtungszusammensetzung nach einem der Ansprüche 1 bis 4 hergestellt ist.

## Revendications

1. Une composition de revêtement pour capuchon de fermeture comprenant :
- un polymère thermoplastique comprenant du polyéthylène haute densité ou un mélange de polyéthylène haute densité et d'acétate de vinyle, le polymère thermoplastique étant présent en une quantité de 40 à 80% en poids de la composition ;
- un polymère formant barrière à l'oxygène comprenant du polyisobutylène, ce polymère formant barrière à l'oxygène étant présent à raison de 5 à 50% en poids de la composition ; et
- un matériau piégeant l'oxygène particulaire, choisi dans le groupe comprenant un sulfite de métal alcalin, un ascorbate de métal alcalin, un isoascorbate de métal alcalin et un mélange de deux ou plusieurs de ces matériaux, le matériau piégeant l'oxygène particulaire étant présent en une quantité de 1-30% en poids de la composition ;
- la composition de revêtement pour capuchon de fermeture étant formée sous forme d'un revêtement de capuchon à couche unique, ce revêtement de capuchon à couche unique présentant une dureté Shore comprise entre 70 Shore A et 100 Shore A et un indice de fluage à l'état fondu compris entre 0 et 20g/min, 2,16 kg., 190°C.

2. La composition de revêtement pour capuchon de fermeture selon la revendication 1, comprenant en poids de la composition
- 50% à 70% d'un polymère thermoplastique,
- 10% à 30% d'un polymère, formant barrière à l'oxygène, comprenant du polyisobutylène et
- 3% à 20% d'un matériau piégeant l'oxygène choisi dans le groupe comprenant un sulfite de métal alcalin, un ascorbate de métal alcalin, un isoascorbate de métal alcalin et un mélange de deux ou plusieurs de ces matériaux.

3. La composition de revêtement pour capuchon de fermeture selon l'une quelconque des revendications précédentes, dans laquelle le polymère faisant barrière à l'oxygène consiste essentiellement en polyisobutylène.

4. La composition de revêtement pour capuchon de fermeture selon l'une quelconque des revendications précédentes, dans laquelle le matériau piégeant l'oxygène particulaire comprend du sulfite de sodium.

5. Un capuchon de fermeture pour un récipient lequel capuchon de fermeture comprend un revêtement de capuchon fabriqué à partir de la composition de revêtement pour capuchon de fermeture selon l'une quelconque des revendications précédentes.

6. Une couronne métallique pour récipient de boisson, dans laquelle la couronne métallique comprend une composition de revêtement pour capuchon de fermeture selon l'une quelconque des revendications 1 à 4.

7. Un récipient rempli d'un produit, lequel récipient étant coiffé par un capuchon de fermeture, lequel capuchon inclut un revêtement pour capuchon de fermeture fabriqué à partir de la composition de revêtement pour capuchon de fermeture selon l'une quelconque des revendications 1 à 4.

8. Une bouteille remplie d'une boisson, dans laquelle la bouteille est coiffée d'une couronne métallique comprenant un revêtement fabriqué à partir d'une composition de revêtement de fermeture selon l'une quelconque des revendications 1 à 4.
